# EUROPÄISCHE PATENTSCHRIFT

(11) **EP 2 478 168 B1**
(45) Veröffentlichungstag und Bekanntmachung des Hinweises auf die Patenterteilung: **01.01.2014**
(21) Anmeldenummer: 10779207.9
(22) Anmeldetag: 15.09.2010
(51) Int. Cl.: E04F 13/08, E04F 15/02, E04F 15/024, F16B 5/00

(54) **BELAG AUS MECHANISCH MITEINANDER VERBINDBAREN ELEMENTEN UND EIN VERFAHREN ZUR HERSTELLUNG VON ELEMENTEN**
COVERING CONSISTING OF ELEMENTS THAT CAN BE MECHANICALLY INTERCONNECTED AND METHOD FOR PRODUCING ELEMENTS
GARNITURE CONSTITUÉE D'ÉLÉMENTS POUVANT ÊTRE RELIÉS MÉCANIQUEMENT ENTRE EUX ET PROCÉDÉ DE FABRICATION D'ÉLÉMENTS

(30) Priorität: 15.09.2009 DE 102009041297
(43) Veröffentlichungstag der Anmeldung: 25.07.2012
(73) Patentinhaber: Schulte, Guido, 59602 Rüthen-Meiste (DE)
(72) Erfinder: Schulte, Guido, 59602 Rüthen-Meiste (DE)
(74) Vertreter: Griepenstroh, Jörg
(86) Internationale Anmeldenummer: PCT/DE2010/001084
(87) Internationale Veröffentlichungsnummer: WO 2011/032540

(56) Entgegenhaltungen:
- EP-A1- 2 034 106
- EP-A2- 1 350 904
- WO-A2-2009/066153
- DE-U1-202007 018 662

## Beschreibung

Die Erfindung betrifft einen Belag aus mechanisch miteinander verbindbaren Elementen und ein Verfahren zur Herstellung von Elementen.

Wand-, Decken- und Bodenbeläge wie z.B. Fertigparkett, Holzböden oder Laminatfußböden, bestehen aus mehreren Reihen von in ihrer Konfiguration vorliegend rechteckigen Paneelen. Konventionell besitzen die Paneele auf einer Längsseite und auf einer Kopfseite durchgehende Nuten und auf der jeweils gegenüberliegenden Längsseite bzw. Kopfseite durchgehende Federn, die an die Nuten formschlüssig angepasst sind. Durch die Verbindung von Nut und Feder werden die Paneele verlegt, wobei die Paneele zweier benachbarter Reihen versetzt zueinander angeordnet werden.

Es ist bekannt, an den Nuten und Federn mechanische Verriegelungsmittel auszubilden, welche bei in einem Fußbodenbelag benachbarten Paneelen miteinander in rastenden Eingriff gelangen. Hierdurch soll eine Fugenbildung im verlegten Fußbodenbelag durch Dehnungs- oder Schrumpfungsvorgänge vermieden werden. An die Nut und Feder der Paneele sind aneinander angepasste Verriegelungselemente in Form von Vertiefungen, Ausnehmungen oder Vorsprüngen ausgebildet, um verbundene Fußbodenpaneele in der zusammengefügten Lage leimlos zu halten. In der Regel werden die Paneele entlang ihrer Längsseiten ineinander gedreht oder geklickt und anschließend seitlich verschoben, so dass Verriegelungsleisten an den Kopfseiten in Eingriff gelangen. Um dieses zu erleichtern, können von der gegenüberliegenden Kopfseite her leichte Hammerschläge unter Zuhilfenahme eines Schlagklotzes angewandt werden. Hierbei besteht die Gefahr, dass es selbst bei sorgfältigstem Arbeiten zu Schäden an den Fußbodenpaneelen kommen kann.

Es gibt auch Lösungen, bei denen die aneinander stoßenden Kopfseiten nicht durch Hammerschläge miteinander verriegelt werden müssen, sondern durch verschiebbare Federelemente. Ein Beispiel hierfür ist der in der DE 20 2007 018 662 U1 beschriebene Bodenbelag, bei welchem identisch ausgebildete Paneele durch eine im Wesentlichen vertikale Fügebewegung in horizontaler und vertikaler Richtung miteinander verriegelt werden können, wobei die Verriegelung in vertikaler Richtung durch zumindest ein in horizontaler Richtung bewegbares, einstückig aus dem Kern an einer Seitenkante herausgebildetes Federelement bewirkbar ist, das bei der Fügebewegung hinter eine sich im Wesentlichen in horizontale Richtung erstreckende Verriegelungskante einschnappt. Das mindestens eine Federelement ist in Richtung der Oberseite und in Richtung der gegenüberliegenden Seitenkante gegenüber dem Kern frei und in seiner Seitenkante an mindestens einem der beiden Enden mit dem Kern verbunden. Es wird als nachteilig angesehen, dass das Federelement zum Verriegeln zunächst mit einer horizontal wirkenden Kraft beaufschlagt werden muss, um das Federelement zurückzudrücken, bevor sich die aufgebaute Federspannung entlädt und das Federelement hinter die Verriegelungsleiste schnappt. Ähnlich verhält es sich bei den in der EP 1 350 904 A2 beschriebenen Fußbodendielen, bei welchen die Feder, die an einer Stirnseite eines Fußbodenelements angebracht werden muss, zunächst zurückgedrückt werden muss, bevor sie in eine zur Verriegelung vorgegebene Aufnahme einschnappen kann. In jedem Fall muss ein hinreichend großer Freiraum hinter der Feder vorhanden sein, damit die Feder vor dem Einschnappen zurückgedrückt werden kann.

Der Erfindung liegt die Aufgabe zu Grunde, einen Belag aus mechanisch miteinander verbindbaren Elementen aufzuzeigen, welcher sich mit geringem Kraftaufwand sicher verriegeln lässt. Weiterhin soll ein Verfahren zur Herstellung von Elementen für einen solchen Belag aufgezeigt werden.

Der gegenständliche Teil dieser Aufgabe ist bei einem Belag mit den Merkmalen des Patentanspruchs 1 gelöst.

Die Unteransprüche betreffen vorteilhafte Weiterbildungen der Erfindung.

Der verfahrensmäßige Teil dieser Aufgabe wird durch ein Verfahren mit den Maßnahmen der Patentansprüche 21 oder 23 gelöst.

Der erfindungsgemäße Belag umfasst mechanisch miteinander verbindbare Elemente, wobei mindestens eines der Elemente ein Paneel ist. Die Erfindung beinhaltet die Möglichkeit, dass eines der Elemente als Paneel und das weitere Element als Rahmenbauteil für eine Rahmenkonstruktion beispielsweise für Doppelböden ausgeführt ist. Die nachfolgende Beschreibung der Erfindung bezieht sich auf eine Ausführung, bei welcher die zu verbindenden Elemente Paneele sind.

Die Elemente besitzen an ihren gegenüberliegenden Seiten eine zueinander korrespondierende Profilierung, mittels welcher benachbarte Elemente mittels einer im Wesentlichen vertikalen oder schwenkenden Fügebewegung in horizontaler Richtung und vertikaler Richtung miteinander verriegelbar sind. Bei den erfindungsgemäßen Elementen ist es möglich, das anzulegende Element abzuschwenken oder abzuklappen. Ebenso ist es möglich, die Elemente durch eine im Wesentlichen oder auch ausschließlich vertikale Bewegung miteinander zu verriegeln. Die gegenüberliegenden, mit einer korrespondierenden Profilierung im Sinne der vorliegenden Erfindung versehenen Seiten sind insbesondere Kopfseiten der Elemente. Die Profilierung kann prinzipiell an allen Seiten, also den Kopfseiten und den Längsseiten, der im Wesentlichen rechteckigen Elemente vorgesehen sein.

Bei der Erfindung ist vorgesehen, dass die Verriegelung durch zumindest ein Federelement bewirkbar ist, das an einem der Elemente angelenkt ist und bei der Fügebewegung hinter eine sich im Wesentlichen in horizontale Richtung erstreckende Verriegelungskante des anderen Elements verschwenkbar ist. Dadurch, dass sich die Verriegelungskante im Wesentlichen in horizontale Richtung erstreckt, werden die beiden Elemente gegen Verlagerung in vertikaler Richtung, d.h. senkrecht zur Verlegeebene, gesichert. An den Elementen können zusätzliche Verriegelungsleisten vorgesehen sein, um zusätzlich zu der Verriegelung in vertikaler Richtung auch die Verriegelung in der Verlegeebene zu bewirken.

Beim Fügen der benachbarten Elemente gleitet das Federelement auf einer der Verriegelungskante gegenüberliegenden Stützfläche des benachbarten Elements ab. Die Stützfläche ist gegenüber der Verlegeebene geneigt und weist zur Verriegelungskante. Durch die Neigung der Stützfläche gleitet ein freies unteres Ende des Federelements von einem höher gelegenen Bereich der Stützfläche auf einen tiefer liegenden, d.h. in größerem Abstand zu einer Oberseite des Elements liegenden, Bereich mit der Folge, dass sich in Abhängigkeit von der Neigung eine horizontale Verlagerung des Federelements einstellt. Je kleiner die Neigung ist, desto größer ist die horizontale Verlagerung. Die Neigung ist so auf die Kontur des Federelements abgestimmt, dass dieses im Wesentlichen spielfrei hinter die Verriegelungskante greift und auf diese Weise die Elemente miteinander verhakt bzw. verriegelt. Die Neigung liegt in einem Bereich von 10° bis 60°, insbesondere in einem Bereich von 15° bis 30°, gegenüber der Verlegeebene.

Alternativ oder optional verläuft die Stützfläche zur Verlegeebene parallel und das Federelement weist an seinem freien Ende eine Abschrägung oder Rundung auf, so dass das freie Ende zur Verlegeebene geneigt ist und dadurch beim Fügen benachbarter Elemente eine horizontale Verlagerung des Federelements hinter die Verriegelungskante bewirkt.

Das erfindungsgemäß ausgestaltete Federelement muss zur Verriegelung also nicht zunächst eine Federkraft überwinden in dem Sinne, dass das Federelement von der benachbarten Seite des Elements zurückgedrückt wird. Es wird vielmehr ausschließlich in Richtung des benachbarten Elements verlagert. Das Federelement schnappt also nicht unter dem Einfluss einer Federkraft hinter die Verriegelungskante, sondern wird zwangsgeführt hinter die Verriegelungskante gedrängt. Das hat den Vorteil, dass kein übergroßer Freiraum auf der dem Kern des Elements zugewandten Rückseite des Federelements erforderlich ist, da das Federelement beim Verriegeln nur in eine Richtung verlagert wird und durch die Verriegelungskante nicht in Richtung des Freiraums gedrückt wird. Die Verlagerung des Federelements erfolgt also ausschließlich in Richtung des benachbarten Elements. Der Zerspanungsaufwand auf der rückwärtigen Seite des Federelements ist dadurch geringer. Der Materialverlust und die Bearbeitungskosten können reduziert werden.

Das Federelement ist in der Verriegelungsposition zwischen der Verriegelungskante und der Stützfläche klemmgehaltert. Das Federelement kann sich nicht selbsttätig wieder zurückbewegen, da es sich an der Stützfläche abstützt. Vorzugsweise befindet sich das Federelement in einem Zustand der Selbsthemmung, der durch die Reibung des freien Endes des Federelements auf der Stützfläche und die Klemmung hinter der Verriegelungskante gegeben ist. Dadurch kann das Federelement nicht ohne eine fremde Kraft zurück in seine Ausgangsposition gelangen, so dass die Elemente sicher in der Verriegelungsposition, d.h. in der Verlegeebene, gehalten sind. Zusätzlich kann an dem Federelement und/oder bevorzugt an der Stützfläche eine die Reibung erhöhende Profilierung vorhanden sein. Anstelle einer Profilierung kann auch eine definierte Raststelle an der Stützfläche ausgebildet sein, in welche das Federelement eingreift oder welche in der Verriegelungsposition hintergriffen wird, damit das Federelement nicht von alleine aus der Verriegelungsposition rutschen kann. Bei einer erhabenen Raststelle, hinter welche das Federelement greifen soll, muss unmittelbar vor dem Überwinden der Raststelle etwas mehr Kraft aufgebracht werden. Bei einer vertieften Raststelle muss die Stützfläche bis zur Raststelle gewissermaßen rampenartig ansteigen, um sich schließlich in der Raststelle zu erweitern. Bis zum Einschnappen des Federelements in diese Raststelle ist der Kraftanstieg daher eher kontinuierlich. In jedem Fall wird durch eine definierte Raststelle, also einen bestimmten Druckpunkt, beim Verlegen oder Montieren der Elemente eine haptische und gegebenenfalls auch akustische Rückmeldung an den Monteur gegeben, die bestätigt, dass die Elemente verriegelt sind. Das vereinfacht die Montage.Bevorzugt ist das Federelement nur an seinem der Oberseite der Elemente benachbarten Ende mit dem Element verbunden. Das von der Oberseite weg weisende untere, freie Ende des Federelements ist dementsprechend nicht mit dem Element verbunden und um eine horizontale Schwenkachse, die sich am oberen Ende des Federelements befindet, verschwenkbar. Hierzu ist hinter dem Federelement ein Freiraum vorhanden, der bezogen auf die Oberseite des Fußbodenelements rechtwinklig oder schräg verlaufen kann.

Es ist im Rahmen der Erfindung möglich, das Federelement als einstückigen Bestandteil des Elements auszugestalten. Das bedeutet, dass das Federelement aus dem Kern des Elements herausgearbeitet worden ist. Dies ist durch einen Freiraum auf der rückwärtigen Seite des Federelements möglich und ein entsprechend freigelegtes unteres, freies Ende des Federelements.

Wenn die Anbindung des Federelements an seinem oberen Ende nicht zu dick ist, verhält sich das Federelement im Bereich des oberen Endes gelenkig, während das untere, freie Ende einen entsprechenden Vorsprung aufweist, der hinter die Verriegelungskante greift. Das untere Ende des Federelements ist daher zumindest bereichsweise dicker als das obere Ende des Federelements, insbesondere dicker als ein Gelenkbereich zwischen dem Federelement und dem Element. Die Dicke bezeichnet die Erstreckung in der Verlegeebene in Richtung zur komplementären Profilierung des benachbarten Elements.

Um die Gelenkigkeit des Federelements zu verbessern, ist es von Vorteil, auf der Seite des Federelements, zu der es gebogen wird, wenigstens eine Quetschfuge vorzusehen. Die Quetschfuge wird beim Abwinkeln des Federelements kleiner. Spannungsspitzen werden durch die Quetschfuge abgebaut und das Federelement bricht bei einer einstückigen Ausführung nicht ab. Es ist denkbar, mehrere parallel zueinander angeordnete Quetschfugen vorzusehen, welche die Verformbarkeit des Federelements weiter erhöhen.

Es ist möglich, die Quetschfugen zumindest teilweise oder sogar vollständig mit einem elastischen Werkstoff zu füllen, der eine größere Elastizität besitzt als das Federelement. Bei dem elastischen Werkstoff kann es sich um einen Klebstoff, beispielsweise Hot-Melt-Klebstoff, oder auch um ein Elastomer, vorzugsweise um ein Reaktivmaterial auf Polyurethan-, Acryl-, Kautschuk- oder Silikonbasis handeln. Alle diese Materialien sind als Reaktivklebstoffe oder Vergussmaterialien mit hohen Elastizitäten und/oder Dehnungen bekannt. Durch Verwendung flexibler Werkstoffe wird selbst bei einem Bruch des Federelements sicherstellt, dass das Federelement im Gelenkbereich mit dem Element verbunden bleibt und sich nicht von dem Element löst. Dies ermöglicht auch ein mehrfaches Aufnehmen und Ablegen der Elemente, ohne dass die Verriegelungsfunktion beeinträchtigt wird. Der elastische Werkstoff ist daher insbesondere ein Hot-Melt.

In einer weiteren Ausführungsform ist vorgesehen, dass die wenigstens eine Quetschfuge einander gegenüberliegende Wände besitzt, die zumindest teilweise, insbesondere vollflächig, mit dem elastischen Werkstoff beschichtet sind, wobei die Beschichtungen aus dem elastischen Werkstoff im unverriegelten Zustand der Element im Abstand zueinander angeordnet sind und im verriegelten Zustand der Elemente in Kontakt miteinander stehen.

Dieser Kontakt kann dafür benutzt werden, dass die Beschichtungen miteinander verkleben. Die Verklebung kann durch so genannte Weichmacherwanderung zwischen den beiden Beschichtungen erfolgen. Möglich wäre selbstverständlich auch eine chemische Einstellung der Klebstoffschicht, so dass diese vor der Montage quasi aushärtet bzw. abgebunden ist. Ergibt sich jedoch ein Druckkontakt mit der gegenüberliegenden Beschichtung, können Kohäsionskräfte entstehen, über welche die beiden Beschichtungen miteinander haften. Selbstverständlich ist es auch möglich, unterschiedliche elastische Werkstoffe zu verwenden, die hinsichtlich ihrer funktionalen Trennung einerseits zur Ausbildung eines Gelenks an dem Federelement vorgesehen sind, wobei ein weiterer elastischer Werkstoff primär zur Verklebung der einander gegenüberliegenden Beschichtungen vorgesehen ist.

Vorteilhaft kann auch der rückwärtige Freiraum hinter dem Federelement zumindest bereichsweise gefüllt sein, und zwar derart, dass der Klebstoff, das Elastomer oder der Reaktivklebstoff das Federelement mit dem Kern verbindet. Die Füllung der Quetschfuge kann zusätzlich oder alternativ zur Füllung im Freiraum vorgesehen sein und ebenfalls aus einem der oben genannten Elastomere, aus Klebstoffen, Reaktivklebstoffen oder Hot-Melts bestehen. Die Füllung im Freiraum gewährleistet eine sicherere Verbindung des Federelements mit dem Element, insbesondere für den Fall, dass bei dem einstückig aus dem Kern herausgearbeiteten Federelement ein Bruch im Bereich der Quetschfuge auftritt. Es ist im Rahmen der Erfindung auch möglich, das Federelement als separates Bauteil herzustellen, das in einem eigenen Arbeitsschritt an dem Element befestigt wird. Die Befestigung kann kraftschlüssig und/oder formschlüssig und/oder durch Kleben erfolgen. Insbesondere die Befestigung mittels eines Klebers hat den Vorteil, dass durch die Klebestelle zugleich ein Gelenk zwischen dem Element und dem Federelement gebildet werden kann.

Es ist auch denkbar, bei einer formschlüssigen Fixierung des Federelements einen Fuß vorzusehen, der in einer Ausnehmung des Elements gehalten ist. Dieser Fuß kann sich insbesondere in einer sich in der Verlegeebene erstreckenden Ausnehmung befinden. Der Fuß kann als Klemmleiste oder Klemmstift ausgeführt sein, je nachdem, wie breit das Federelement ist. Zwischen dem Fuß und dem Federelement kann eine Engstelle vorhanden sein, um ein Gelenk zu bilden. Wenn der Fuß und das Federelement separate Bauteile sind, ist es wiederum denkbar, das Gelenk aus einem elastischen Klebstoff, einem Elastomer, einem Reaktivklebstoff oder Hot-Melt zu bilden, das sich zwischen dem Federelement und dem Fuß befindet. Bei einem Klebstoff handelt es sich vorzugsweise wiederum um ein Hot-Melt.

Grundsätzlich ist es aber auch denkbar, das Federelement als separates Bauteil beispielsweise aus einem Kunststoff im Spritzgussverfahren herzustellen, wobei das Federelement in diesem Fall individuell mit unterschiedlichen Wandstärken konfiguriert werden kann, so dass durch den Spritzgussvorgang beispielsweise Filmgelenke realisiert werden können, die eine leichte Verlagerung des Federelements gegenüber dem Fuß des Federelements ermöglichen. Alternativ ist auch der Einsatz von im Extrusionsverfahren oder im Co-Extrusionsverfahren hergestellten Kunststoffen denkbar. Die Wahl des Herstellungsverfahrens ist dabei unter anderem abhängig von der gewählten Geometrie, der Wandstärke und der Materialzusammensetzung des Federelements.

Es ist zwar theoretisch möglich, bei einem rein vertikalen Ablegen eines Elements nur ein einziges verschwenkbares, leistenartiges Federelement vorzusehen, es wird jedoch als zweckmäßig erachtet, wenn an einer Seite eines Elements mehrere unabhängig voneinander verschwenkbare Federelemente angeordnet sind. In diesem Fall ist nämlich nicht nur das im Wesentlichen vertikale Ablegen des Elements möglich, sondern auch das klemmungsfreie Abwinkeln oder Abklappen der Elemente, bei welchen beispielsweise im Kopfseitenbereich zunächst eine Ecke der Kopfseiten miteinander in Eingriff gelangen und dann durch weiteres Abklappen des anzulegenden Elements letztlich beide Kopfseiten parallel zueinander verlaufen und vollständig miteinander in Eingriff stehen. Da es bei einem einzigen langen Federelement zu einer ungleichmäßigen Belastung während des Abklappens kommen würde und damit zu Spannungen innerhalb des Federelements, ist es zweckmäßig, mehrere einzelne Federelemente vorzusehen, die zeitlich zueinander versetzt betätigt werden. Dabei können die Federelemente aneinander angrenzend oder voneinander beabstandet angeordnet sein. Vorteilhafterweise ist mehr als ein Federelement pro Seite angeordnet. Es ist auch denkbar, Federelemente unterschiedlicher Elastizitäten an einer Seite anzuordnen, wodurch ein gestufter Einrastvorgang ermöglicht wird. Die Federelemente können daher auch durchaus im Abstand zueinander angeordnet sein. Bei einer einteiligen Ausbildung der Federelemente zusammen mit dem Element ist es möglich, mehrere Schlitze in den Federelementen auszubilden, damit diese beim Abklappen der Reihe nach betätigt werden können.

Es besteht die Möglichkeit, einander benachbarte Federelemente zueinander relativ beweglich miteinander zu verbinden. Als Verbindungsmittel kann ein elastisches Bauelement dienen, wie z.B. ein elastischer Klebstoff, wie er auch in der Quetschfuge oder in dem rückwärtigen Freiraum zum Einsatz kommt. Die elastische Verbindung ermöglicht es, die Federelemente kleiner zu gestalten, ohne dass die Gefahr besteht, dass sich ein einzelnes Federelement von dem Element bei Beschädigung löst. Der Gestaltungsspielraum ist grundsätzlich größer, wenn die Federelemente zusätzlich klebetechnisch mit dem Element verbunden sind.

In vorteilhafter Weiterbildung weist das die Verriegelungskante aufweisende Element eine unter das das Federelement tragende Element greifende Verriegelungsleiste auf. Diese Verriegelungsleiste ist geeignet, die benachbarten Elemente gegen Zugbelastungen in einer Verlegeebene zu sichern. Durch die zusätzliche Verriegelungsleiste werden ausschließlich horizontale Zugkräfte aufgenommen, also Zugbelastungen in der Verlegeebene. Dadurch wird sichergestellt, dass an der Oberseite kein Fügespalt verbleibt. Das Eintreten von Flüssigkeit und Verschmutzungen in etwaige Spalten wird verhindert.

Die Verriegelungsleiste kann insbesondere bei Wandbelägen auch dazu dienen, an einer Unterkonstruktion, insbesondere einer wandseitigen Unterkonstruktion, befestigt zu werden. Zum Beispiel kann die Verriegelungsleiste durch ein Befestigungsmittel in Form eines Clips an der Unterkonstruktion befestigt werden. Denkbar ist auch, die Verriegelungsleiste unmittelbar anzuschrauben, anzunageln oder anzuheften, d.h. ohne zusätzlichen Clip zu fixieren.

Der Werkstoff für das Federelement kann sowohl ein Holzwerkstoff sein, d.h. es kann sich um Holz oder um einen Holzfasern enthaltenden Werkstoff handeln oder um einen Werkstoff, der aus Holz als Basismaterial hergestellt ist, wie beispielsweise Flüssigholz. Metall und Metalllegierungen kommen für die Federelemente ebenso infrage wie Verbundwerkstoffe. Der Einsatz von Mischkunststoffen ist ebenso möglich wie die Verwendung von Werkstoffen auf Basis thermoplastischer oder duroplastischer Kunststoffe. Das Federelement kann auch aus einem faserverstärkten Kunststoff bestehen.

Der Erfindungsgedanke ist auf alle Bodensysteme und Wandsysteme anwendbar, bei denen ein Oberbelag auf einem Träger, bei welchem es sich insbesondere um eine Holzwerkstoffplatte, wie z.B. eine MDF- oder Spanplatte, handelt, angeordnet ist, wie beispielsweise Echtholzbeläge, Laminat, Träger mit lackierten Oberflächen als Oberbelag, Linoleum, Kork auf Trägerplatten etc. Die Deckschicht kann insbesondere aus einem Dekorpapier mit Overlay bestehen, welches die Optik der Elemente bestimmt. Bei einem Fußbodenbelag kann es sich somit um einen Parkettboden, einen Fertigparkettboden, einen Echtholzboden oder um einen Laminatfußboden handeln. Ebenso eignen sich Elemente aus massiven Materialien wie beispielsweise Holzdielen, Holzelemente, gegossene Formplatten aus Plastik, Kunststoffen, Formteilen oder Gipsplatten. Der Erfindungsgedanke betrifft nicht nur das Verbinden von Elementen, sondern es ist, wie eingangs erwähnt, auch denkbar, ein Element als Rahmenbauteil für Rahmenböden oder Doppelböden auszuführen. Bei einer solchen Anwendung ist eines der zu verbindenden Elemente als Paneel und ein zweites Element als Rahmenbauteil konfiguriert. Das Paneel wird beim Zusammenbau in die aus einem oder mehreren Rahmenbauteilen bestehende Rahmenkonstruktion abgelegt und mit seinen Kopf- und/oder Längsseiten eingerastet.

Gegenstand der Erfindung ist auch ein Verfahren zur Herstellung eines Elements, bei welchem ein Freiraum hinter dem Federelement zur Befestigung des Federelements genutzt wird. Das Verfahren zur Herstellung eines Elements, insbesondere eines Paneels sieht folgende Schritte vor:
a) Ausformen des Federelements an dem Element durch Einbringen eines Freiraums auf einer Rückseite des Federelements;
b) zumindest teilweises Füllen des Freiraums mit einem elastischen Werkstoff, der sich von der Rückseite des Freiraums zum Kern des Elements erstreckt, um das Federelement mit dem Kern zu verbinden;
c) Trennen des Federelements von dem Element, so dass es nur von dem elastischen Werkstoff an dem Kern gehalten ist.

Diese Vorgehensweise hat den Vorteil, dass zunächst das einstückig mit dem Element, insbesondere mit einem Paneel verbundene Federelement mit hoher Präzision aus dem Vollen, d.h. aus dem Kern, herausgearbeitet werden kann. Die Position des Federelements bleibt auch dann erhalten, wenn der elastische Werkstoff in den Freiraum eingebracht wird. Bei dem elastischen Werkstoff handelt es sich insbesondere um einen Klebstoff, der vorzugsweise schnell aushärtet, selbstverständlich ohne dabei spröde zu werden. Vorzugsweise wird hierfür ein Reaktivklebstoff auf Ein- oder Zwei-Komponenten-Basis eingesetzt. Im dritten Schritt kann das noch einteilig mit dem Element ausgebildete Federelement durch einen Trennvorgang von dem Element separiert werden.

Alternativ hierzu kann eine Befestigung des Federelements auch oberhalb des Federelements am Kern des Elements erfolgen. Das Verfahren hierzu umfasst folgende Schritte:
a) Ausformen des Federelements durch Einbringen einer Quetschfuge in Form einer Einkerbung, die im Abstand zur Oberseite des Elements und oberhalb des Federelements verläuft;
b) zumindest teilweises Füllen der Quetschfuge mit einem elastischen Werkstoff, der sich von einer Oberseite des Federelements zum Kern des Paneels erstreckt, um das Federelement mit dem Kern des Elements zu verbinden;
c) Trennen des Federelements vom Element durch Einbringen eines Freiraums auf einer Rückseite des Federelements, so dass es nur von dem elastischen Werkstoff an dem Kern gehalten ist.

Die Lage des Federelements ändert sich bei beiden Verfahren nicht, da es durch den elastischen Werkstoff mit dem Kern verbunden bleibt. Der Trennschnitt erfolgt daher nur dort, wo das Federelement ursprünglich einstückig mit dem Element verbunden war. Das Federelement ist nun ein separates Bauteil, das formgebend aus dem Element herausgearbeitet worden ist und über lagefixierende Mittel in seiner Ausgangslage verbleibt.

Alternativ kann die Herstellung des Elements auch folgendermaßen erfolgen:
a) Ausformen des Federelements durch Einbringen einer Quetschfuge, die im Abstand zur Oberseite des Elements und oberhalb des Federelements verläuft und Einbringen eines Freiraums auf der Rückseite des Federelements, wobei zuerst die Quetschfuge oder zuerst der Freiraum angebracht werden kann;
b) zumindest teilweises Füllen der Quetschfuge mit einem elastischen Werkstoff, der sich auf zwei gegenüberliegenden Wänden der Quetschfuge erstreckt, um das Federelement zusätzlich mit dem Kern des Elements zu verbinden;
c) Verbreitern des Freiraums in Richtung der Rückseite des Federelements, so dass das Federelement entweder nur über den elastischen Werkstoff oder aber flächenmäßig überwiegend über den elastsichen Werkstoff mit dem Kern verbunden ist.

Bei dieser dritten Variante ist die Quetschfuge insbesondere V-förmig konfiguriert und weist an ihren gegenüberliegenden Wänden eine Beschichtung aus dem elastischen Werkstoff auf. Diese Beschichtung sollte sehr schnell aushärten, da das Aushärten innerhalb der Profilierungslinie erfolgt, in welcher mit hohen Vorschubgeschwindigkeiten gearbeitet wird. Durch Verbreitern des rückwärtigen Freiraums beim Auftragen des elastischen Materials besteht noch kein hinreichend stabiler Nutgrund der Quetschfuge. Erst wenn der Nutgrund der Quetschfuge eine hinreichend hohe Festigkeit erreicht hat, kann durch gezielte Verbreiterung des Freiraums die Stabilität des Gelenks bzw. die Festigkeit der Anbindung des Federelements an den Kern gezielt eingestellt werden.

Diese Verfahren sind wesentlich genauer, als Federelemente separat herzustellen und über geeignete Positionierhilfen klebetechnisch mit dem Element zu verbinden. Es können engere Fertigungstoleranzen und höhere Qualitätsstandards eingehalten werden.

Die Erfindung wird nachfolgend anhand von in den schematischen Zeichnungen dargestellten Ausführungsbeispielen zur Verbindung zweier Elemente in Form von Paneelen näher erläutert. Natürlich sind die gezeigten Verbindungen ohne Weiteres auf die Verbindung zwischen einem Rahmenbauteil einer Rahmenkonstruktion und einem Paneel übertragbar. Es zeigen:
- Figuren 1 bis 3: jeweils einen Querschnitt durch den Verbindungsbereich zweier benachbarter Elemente in unterschiedlichen Montagestellungen, wobei Figur 1 die noch unverriegelte Position zeigt und Figur 3 die Verriegelungsposition darstellt;
- Figuren 4 und 5: jeweils einen Querschnitt durch den Verbindungsbereich zweier benachbarter Elemente in unterschiedlichen Montagestellungen unter Verwendung einer weiteren Ausführungsform eines Federelements;
- Figuren 6 und 7: jeweils einen Querschnitt durch den Verbindungsbereich zweier benachbarter Elemente in unterschiedlichen Montagestellungen unter Verwendung einer weiteren Ausführungsform eines Federelements;
- Figuren 8 und 9: jeweils einen Querschnitt durch den Verbindungsbereich zweier benachbarter Elemente in unterschiedlichen Montagestellungen unter Verwendung einer weiteren Ausführungsform eines Federelements und
- Figuren 10 und 11: einen Querschnitt durch den Verbindungsbereich zweier benachbarter Elemente in unterschiedlichen Montagestellungen unter Verwendung einer weiteren Ausführungsform eines Federelements.

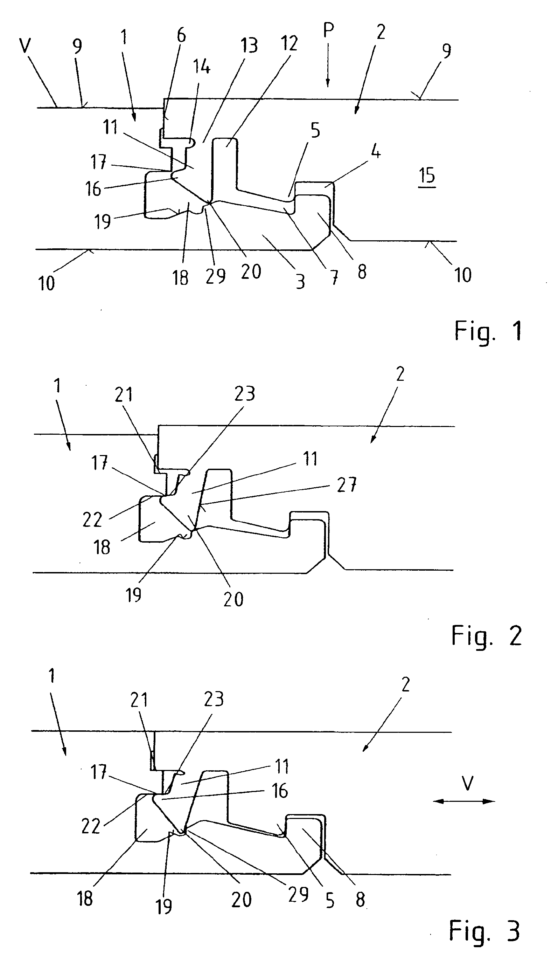

Figur 1 zeigt einen Querschnitt durch zwei Elemente 1, 2 in Form von Paneelen. Es kann sich hierbei um einen längsseitigen oder kopfseitigen Querschnitt der Elemente 1, 2 handeln. Die Elemente 1, 2 sind identisch konfiguriert, so dass die Elemente 1, 2 zu einem Fußbodenbelag zusammengesetzt werden können. Figur 1 zeigt zwei benachbarte Elemente 1, 2 vor der Verriegelung. Hierbei zeigt die Darstellung links ein erstes Element 1 und rechts ein zweites Element 2, welches dafür vorgesehen ist, mit dem ersten Element 1 verbunden zu werden. Das erste Element 1 weist eine Verriegelungsleiste 3 auf und das zweite Element 2 einen nach unten offenen Kuppelkanal 4 und einen sich hieran anschließenden, nach unten gerichteten endseitigen Kuppelwulst 5. Die Verriegelungsleiste 3 des ersten Elements 1 steht gegenüber einer Kopfseite, die bei diesem Ausführungsbeispiel nur als Seite 6 bezeichnet wird, vor. Das Element 2 wird so gegenüber Element 1 angeordnet, dass beim Absenken in Pfeilrichtung P der Kuppelwulst 5 des zweiten Elements 2 mit dem Kuppelkanal 7 der Verriegelungsleiste 3 und der Kuppelkanal 4 des zweiten Elements 2 mit dem Kuppelwulst 8 der Verriegelungsleiste 3 in Eingriff gelangt. Dieser Bereich der Elemente 1, 2 dient im Wesentlichen zur Lageorientierung in horizontaler Ebene, wobei horizontal im Kontext der Erfindung der Verlegeebene V entspricht, die mit den zueinander parallelen Oberseiten 9 und Unterseiten 10 der Elemente 1, 2 zusammenfällt.

Wesentlicher Bestandteil der erfindungsgemäßen Profilierung ist jedoch ein Federelement 11. Das Federelement 11 ist eine im Wesentlichen nach unten, d.h. von der Oberseite 9 weg, gerichtete Zunge, die durch einen im Querschnitt rechteckig ausgebildeten Freiraum 12 zum Kern 15 des Elements 2 gebildet ist. Das Federelement 11 ist mit einem oberen Ende 13 mit dem Element 2 verbunden. Es ist zu erkennen, dass auf der dem Freiraum 12 abgewandten Seite eine Quetschfuge 14 als schmale Einkerbung angeordnet ist. Wie anhand der Figuren 2 und 3 zu erkennen ist, dient die Quetschfuge 14 dazu, verkleinert werden, wenn das Federelement 11 in horizontale Richtung, d.h. zur Seite 6 des anderen Elements 1 hin, verlagert wird. Die Quetschfuge 14 ist eine die Dicke des Federelements 11 reduzierende Einschnürung, die dazu dient, das obere Ende 13 des Federelements 11 gegenüber dem Kern 15 beweglich zu gestalten.

Ein weiteres wesentliches Element des Federelements 11 ist ein Vorsprung 16, der zum anderen Element 1 weist und dafür vorgesehen ist, hinter eine Verriegelungskante 17 des anderen Elements 1 zu greifen. In dem anderen Element 1 ist hierzu eine Nut 18 vorgesehen, welche den Vorsprung 16 aufnehmen kann.

In die Nut 18 bzw. eine untere Nutwange der Nut 18 mündet darüber hinaus eine Stützfläche 19, an welcher sich das untere freie Ende 20 des Federelements 11 abstützt. Die Stützfläche 19 ist gegenüber der Verlegeebene V, d.h. gegenüber der Horizontalen, geneigt. Die Stützfläche 19 ist hier eine Gerade mit einer Steigung um ca. 20° gegenüber der Verlegeebene V. Die Stützfläche 19 kann aber auch eine konkave Krümmung aufweisen. Darüber hinaus weist die Stützfläche 19 in dieser Ausführung eine vertiefte Raststelle 29 in Form einer Nut auf.

Das Federelement 11 hat bei einer Verlagerung in Richtung des Pfeils P, d.h. beim Absenken des Elements 2, nur die Möglichkeit, entsprechend der Neigung der Stützfläche 19 auf dieser abzugleiten. Dabei verbiegt sich das Federelement 11 im Bereich der Quetschfuge 14, so dass der Vorsprung 16 hinter die Verriegelungskante 17 geführt wird.

Figur 2 zeigt das Federelement 11 in einer Zwischenposition, bevor es die in Figur 3 dargestellte Endposition erreicht. In der Endposition befinden sich die beiden Oberseiten 9 der Elemente 1, 2 in der gleichen Horizontalebene. Es besteht kein Versatz mehr. Es ist zu erkennen, dass das rechte Element 2 nicht weiter abgesenkt werden kann. Es stützt sich auf einer Konsole 21 des ersten Elements 1 ab, die sich noch oberhalb der Verriegelungskante 17 befindet. Diese Konsole 21 ist relativ nah an der Oberseite 9 angeordnet, so dass eine auf das in der Bildebene rechte Element 2 ausgeübte Kraft auf möglichst kurzem Weg in das linke Element 1 eingeleitet wird. Dadurch wird ein etwaiger Höhenversatz minimiert.

Ferner ist anhand der Figur 3 zu erkennen, dass sich in der Verriegelungsposition der Kuppelwulst 5 nahezu vollständig hinter dem Kuppelwulst 8 der Verriegelungsleiste 3 befindet, so dass eine sichere Arretierung in Horizontalrichtung gegeben ist.

Die Stützfläche 19 ist so konfiguriert, dass das Ende 20 des Federelements 11 beim Verriegeln in die vertiefte Raststelle 29 geführt wird und dort einrasten kann. Es kommt zu einer Lagefixierung des Federelements 11 in der vertieften Raststelle 29 und damit zu einer sicheren Klemmung des Vorsprungs 16 hinter der Verriegelungskante 17.

Die obere Nutwange 22 der Nut 18, die in der Verriegelungskante 17 endet, verläuft in der Verlegeebene V, d.h. in Horizontalrichtung. Auch eine Rastfläche 23 an dem Vorsprung 16 des Federelements 11 verläuft in der Verriegelungsposition horizontal, d.h. in der Verlegeebene V. Wird nun eine vertikale Kraft auf das in der Bildebene linke Element 1 ausgeübt, kann über diese Rastfläche 23 eine hinreichende Abstützkraft in das Federelement 11 eingeleitet werden, welche sich auf das rechte Element 2 überträgt.

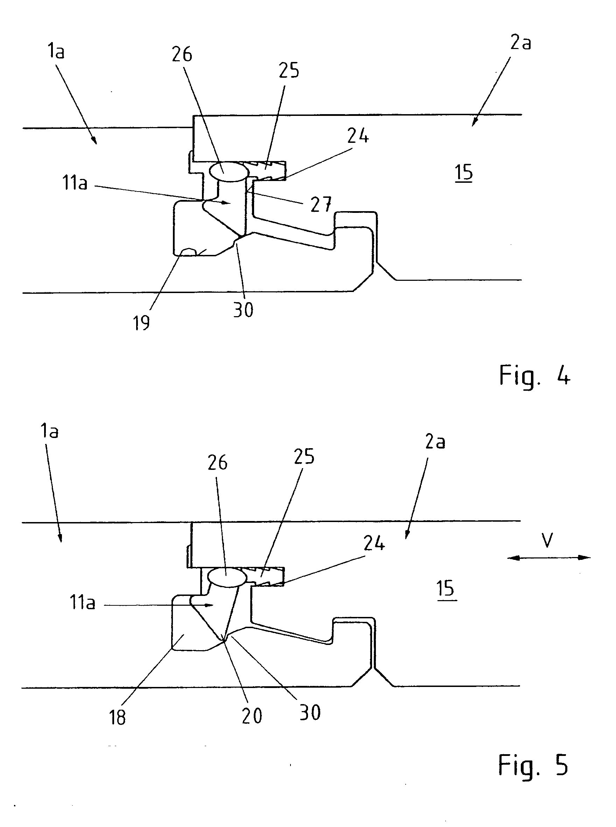

Die Ausführungsform der Figur 4 unterscheidet sich von derjenigen der Figur 1 dadurch, dass ein Federelement 11a zum Einsatz kommt, das nicht einteilig aus dem Element 2a hergestellt worden ist, sondern in einem separaten Fertigungsschritt dort eingefügt worden ist. Die Funktionsweise ist als solche nahezu identisch zu derjenigen der Figuren 1 bis 3, so dass auf die vorstehenden Erläuterungen und die dort bereits eingeführten Bezugszeichen Bezug genommen wird. Im Unterschied zu den Figuren 1 bis 3 weist die Stützfläche 19 hier eine erhabene Raststelle 30 auf. Das Ende 20 des Federelements 11a wird während des Verriegelns über die Raststelle 30 gedrückt und kommt hinter der Raststelle 30 mit seiner Rückseite 27 an der Raststelle 30 zum Anliegen.

Das Federelement 11a ist mit einem Fuß 25 ausgestattet, der sich in einer Aufnahme 24 befindet, die sich in Horizontalrichtung, d.h. in der Verlegeebene V, erstreckt. An diesen Fuß 25 schließt sich ein Gelenk 26 an. Das Gelenk 26 sorgt für die Schwenkbeweglichkeit des Federelements 11a gegenüber dem in der Bildebene rechten Element 2a. Das Gelenk 26 kann von einem elastischen Klebstoff gebildet sein, der das Federelement 11a mit dem Fuß 25 verbindet. Der Fuß 25 selbst kann entsprechend profiliert sein und ist dadurch kraftschlüssig in der Aufnahme 24 gehalten. Figur 5 zeigt die gesamte Anordnung mit dem Federelement 11 a in der Verriegelungsposition.

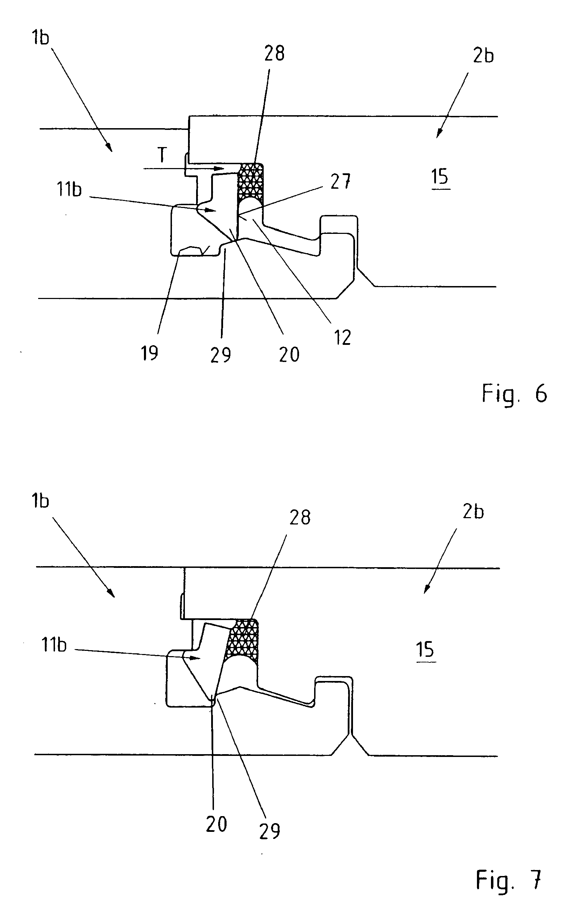

Figur 6 zeigt eine weitere Ausführungsform, bei welcher im Gegensatz zu Figur 1 und Figur 4 ein Federelement 11 b zum Einsatz kommt, welches mittels Klebstoff mit dem Element 2b verbunden ist. Dabei wird ein auf der Rückseite 27 des Federelements 11 b ausgeformter Freiraum 12 teilweise mit einem elastischen Werkstoff oder Klebstoff 28 befüllt und dieser ausgehärtet. Anschließend erfolgt die Trennung des Federelements 11 b von dem Element 2b durch einen in der Bildebene horizontalen Trennschnitt T.

Die Lage des Federelements 11 b ändert sich dabei nicht, da es durch den elastischen Werkstoff oder Klebstoff 28 mit dem Kern 15 verbunden bleibt. Die Verbindung zwischen Federelement 11 b ist elastisch und die Funktionsweise ist als solche identisch zu derjenigen der Figuren 1 bis 3 und 4 bis 5, so dass auf die vorstehenden Erläuterungen und auf die dort bereits eingeführten Bezugszeichen Bezug genommen wird.

Das Federelement 11 b hintergreift in einer Verriegelungsposition, dargestellt in Figur 7, mit seinem Ende 20 eine Raststelle 29 ähnlich der Figuren 1 bis 3, mit dem Unterschied, dass die Raststelle 29 hier als eine Art Stufe in der Stützfläche 19 konfiguriert ist. Nach dem Verriegeln wird das Federelement 11 b durch die Rückstellkräfte des elastischen Werkstoffs oder Klebstoffs 28 mit seiner Rückseite 27 gegen die Raststelle 29 gezogen.

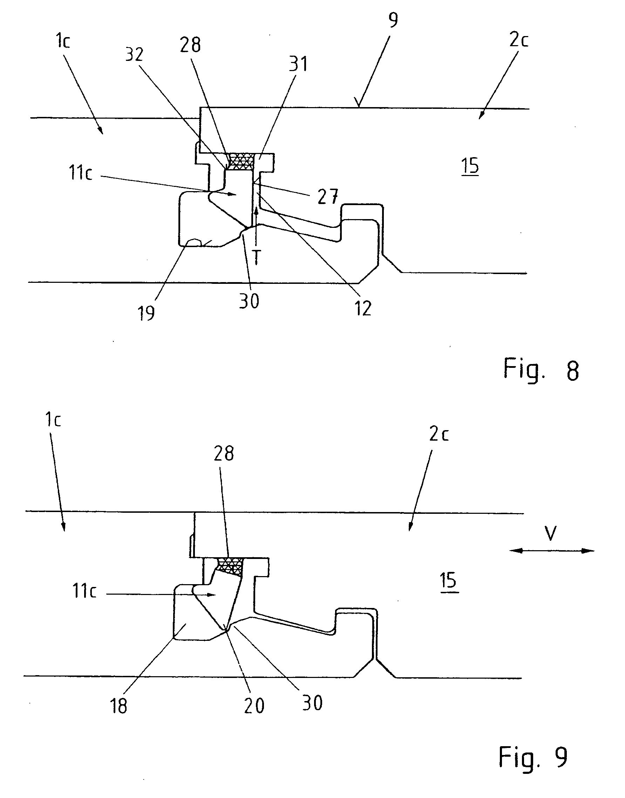

Figur 8 zeigt eine weitere Ausführungsform, bei welcher im Gegensatz zu Figur 1 und Figur 4 ein Federelement 11c zum Einsatz kommt, welches mittels Klebstoff mit dem Element 2c verbunden ist. Dabei wird oberhalb des Federelements 11 c in der Bildebene horizontal, eine Quetschfuge 31 eingebracht, die im Abstand zur Oberseite 9 des Elements 2c und oberhalb des Federelements 11 c verläuft. Die Quetschfuge 31 verläuft in der dargestellten Ausführung im Wesentlichen parallel zur Oberseite 9 des Elements 2c. Die Quetschfuge 31 wird teilweise mit einem elastischen Werkstoff oder Klebstoff 28 befüllt, der sich von einer Oberseite 32 des Federelements 11 c zum Kern 15 des Elements 2c erstreckt. Anschließend erfolgt die Trennung des Federelements 11 c von dem Element 2c durch einen Trennschnitt T an der Rückseite 27 des Federelements 11c in der Bildebene vertikal.

Die Lage des Federelements 11 c ändert sich dabei nicht, da es durch den elastischen Werkstoff oder Klebstoff 28 mit dem Kern 15 verbunden bleibt. Die Verbindung zwischen Federelement 11 c ist elastisch und die Funktionsweise ist als solche identisch zu derjenigen der Figuren 1 bis 3 und 4 bis 7, so dass auf die vorstehenden Erläuterungen und auf die dort bereits eingeführten Bezugszeichen Bezug genommen wird.

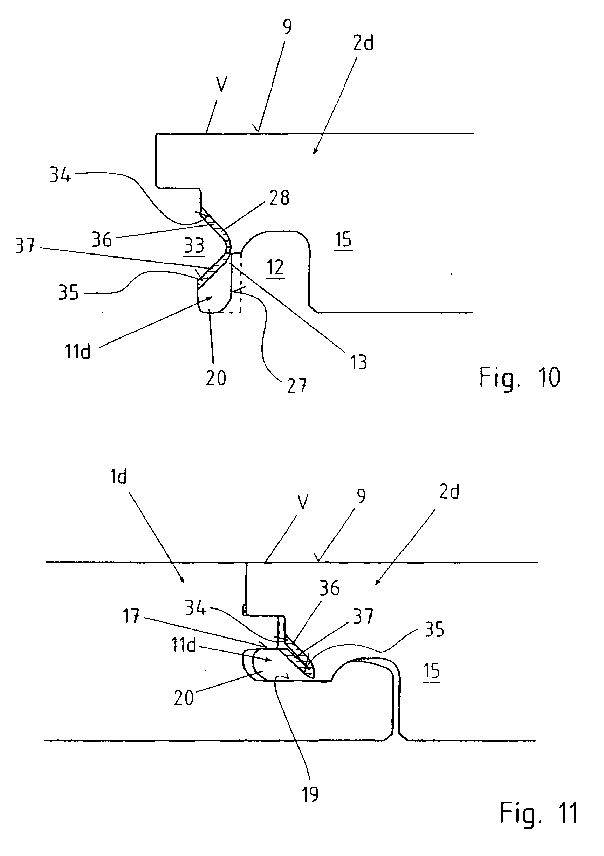

Die Figuren 10 und 11 zeigen eine weitere Ausführungsform, bei welcher eine V-förmige Quetschfuge 33 mit relativ großen Mündungswinkeln vorgesehen ist. Die Quetschfuge 33 besitzt mithin sich gegenüberliegende Wände 34, 35, die über einen bogenförmigen Quetschfugengrund ineinander übergehen. Die Quetschfuge 33 ist teilweise mit einem elastischen Werkstoff 28 gefüllt, der in Form von Beschichtungen 36, 37 auf den gegenüberliegenden Wänden 34, 35 angebracht ist. Auf der dem Federelement 11 d dem Kern 15 zugewandten Rückseite 27 befindet sich der vorstehend erläuterte Freiraum 12, der bis auf den mit unterbrochener Linie eingezeichneten Bereich der Feder zuerst entfernt wird. Erst nachdem der elastische Werkstoff 28 in die Quetschfuge 33 eingebracht und ausgehärtet oder zumindest teilweise gehärtet wurde, wird der Freiraum 12 in Richtung der Rückseite 27 des Federelements 11 d verbreitert, so dass das Federelement 11d die dargestellte Endkontur erhält. Dabei wird auch das freie Ende 20 des Federelements zu seiner Rückseite 27 hin gerundet ausgeführt, um ein Abgleiten auf der Stützfläche 19, die in diesem Ausführungsbeispiel parallel zur Verlegeebene V verläuft, zu ermöglichen.

Wie bei den vorhergehenden Ausführungsformen wird das Federelement um das Gelenk, das sich im Bereich des Tiefsten der Quetschfuge 33 befindet, horizontal ausgelängt und in der Bildebene zur Verriegelung nach links verlagert. Dabei nähern sich die Beschichtungen 36, 37 aus dem elastischen Werkstoff 28 einander an und treten zumindest teilweise in Kontakt. Hierdurch erfolgt eine zumindest teilweise Verklebung der einander gegenüberliegenden Beschichtungen 36, 37. Im Übrigen wird auf die Erläuterung zu den Figuren 1 bis 9 Bezug genommen.

### Bezugszeichen:

- 1 -: Element
- 1a -: Element
- 1b -: Element
- 1c -: Element
- 1d -: Element
- 2 -: Element
- 2a-: Element
- 2b-: Element
- 2c-: Element
- 2d -: Element
- 3 -: Verriegelungsleiste
- 4 -: Kuppelkanal
- 5 -: Kuppelwulst
- 6 -: Seite
- 7 -: Kuppelkanal
- 8 -: Kuppelwulst
- 9 -: Oberseite
- 10 -: Unterseite
- 11 -: Federelement
- 11a -: Federelement
- 11b -: Federelement
- 11c -: Federelement
- 11d -: Federelement
- 12 -: Freiraum
- 13 -: oberes Ende
- 14 -: Quetschfuge
- 15 -: Kern
- 16 -: Vorsprung
- 17 -: Verriegelungskante
- 18 -: Nut
- 19 -: Stützfläche
- 20 -: Ende
- 21 -: Konsole
- 22 -: Nutwange
- 23 -: Rastfläche
- 24 -: Aufnahme
- 25 -: Fuß
- 26 -: Gelenk
- 27 -: Rückseite
- 28 -: Werkstoff/Klebstoff
- 29 -: Raststelle
- 30 -: Raststelle
- 31 -: Quetschfuge
- 32 -: Oberseite
- 33 -: Quetschfuge
- 34 -: Wand
- 35 -: Wand
- 36 -: Beschichtung
- 37 -: Beschichtung

- T -: Trennschnitt
- P -: Pfeil
- V -: Verlegeebene

## Patentansprüche

1. Belag aus mechanisch miteinander verbindbaren Elementen, wobei mindestens eines der Elemente ein Paneel (1, 1a - 1d, 2, 2a - 2d) ist mit folgenden Merkmalen:
a) die Elemente (1, 1a - 1 d, 2, 2a - 2d) besitzen an ihren gegenüberliegenden Seiten (6) eine zueinander korrespondierende Profilierung, mittels welcher benachbarte Elemente (1, 1a - 1 d, 2, 2a - 2d) mittels einer im Wesentlichen vertikalen oder schwenkenden Fügebewegung in horizontaler Richtung und vertikaler Richtung miteinander verriegelbar sind,
b) die Verriegelung ist durch zumindest ein Federelement (11, 11a - 11d) bewirkbar, das an einem der Elemente (1, 1a - 1 d, 2, 2a - 2d) angelenkt ist und bei der Fügebewegung hinter eine sich im Wesentlichen in horizontale Richtung erstreckende Verriegelungskante (17) des anderen Elements (1, 1a - 1 d) verschwenkbar ist,
**dadurch gekennzeichnet, dass**
c) das Federelement (11, 11a - 11 d) beim Fügen benachbarter Elemente (1, 1a - 1d, 2, 2a - 2d) auf einer der Verriegelungskante (17) gegenüberliegenden Stützfläche (19) des benachbarten Elements (1, 1a - 1d) abgleitet,
d1) wobei die Stützfläche (19) zur Verriegelungskante (17) weisend gegenüber einer Verlegeebene (V) geneigt ist und eine horizontale Verlagerung des Federelements (11, 11a - 11d) hinter die Verriegelungskante (17) bewirkt,
d2) oder wobei alternativ die Stützfläche (19) zur Verlegeebene (V) parallel verläuft und das Federelement (11d) an seinem freien Ende (20) zur Verlegeebene (V) geneigt ist und dadurch beim Fügen benachbarter Elemente (1d, 2d) eine horizontale Verlagerung des Federelements (11 d) hinter die Verriegelungskante (17) bewirkt.

2. Belag nach Anspruch 1, **dadurch gekennzeichnet, dass** die Verlagerung des Federelements (11, 11a - 11 d) ausschließich in Richtung des benachbarten Elements (1, 1 a - 1d) erfolgt.

3. Belag nach Anspruch 1 oder 2, **dadurch gekennzeichnet, dass** das Federelement (11, 11a - 11d) in der Verriegelungsposition zwischen der Verriegelungskante (17) und der Stützfläche (19) klemmgehaltert ist.

4. Belag nach einem der Ansprüche 1 bis 3, **dadurch gekennzeichnet, dass** das Element (2, 2a - 2d) eine Oberseite (9) aufweist, wobei das Federelement (11, 11c, 11d) nur an seinem der Oberseite (9) benachbarten Ende (13) mit dem Element (2, 2c, 2d) verbunden ist.

5. Belag nach einem der Ansprüche 1 bis 4, **dadurch gekennzeichnet, dass** das Federelement (11) einstückiger Bestandteil des Elements (2) ist.

6. Belag nach Anspruch 4 oder 5, **dadurch gekennzeichnet, dass** das Federelement (11, 11c - 11 d) wenigstens eine Quetschfuge (14, 31, 33) aufweist.

7. Belag nach Anspruch 6, **dadurch gekennzeichnet, dass** in der wenigstens einen Quetschfuge (31, 33) elastischer Werkstoff angeordnet ist, der eine größere Elastizität besitzt als das Federelement (11c, 11 d).

8. Belag nach Anspruch 7, **dadurch gekennzeichnet, dass** die wenigstens eine Quetschfuge (33) einander gegenüberliegende Wände (34, 35) besitzt, die zumindest teilweise, insbesondere vollflächig, mit dem elastischen Werkstoff beschichtet sind, wobei die Beschichtungen (36, 37) im unverriegelten Zustand im Abstand zueinander angeordnet sind und im verriegelten Zustand in Kontakt miteinander stehen.

9. Belag nach Anspruch 8, **dadurch gekennzeichnet, dass** die miteinander in Kontakt stehenden Beschichtungen (36, 37) dafür vorgesehen sind, bei gegenseitigem Kontakt miteinander zu verkleben.

10. Beleg nach einem der Ansprüche 1 bis 7, **dadurch gekennzeichnet, dass** eine Rückseite (27) des Federelements (11b) einem Kern (15) des Elements (2b) zugewandt ist, wobei sich zwischen dem Kern (2b) und der Rückseite (27) ein Freiraum (12) befindet, in welchem zumindest teilweise ein elastischer Werkstoff angeordnet ist, über welchen das Federelement (11 b) mit dem Kern (15) verbunden ist.

11. Belag nach einem der Ansprüche 1 bis 10, **dadurch gekennzeichnet, dass** der elastische Werkstoff ein Klebstoff ist.

12. Belag nach einem der Ansprüche 1 bis 4, **dadurch gekennzeichnet, dass** das Federelement (11a) ein separates Bauteil ist, das an dem Element (2a) befestigt ist.

13. Belag nach Anspruch 12, **dadurch gekennzeichnet, dass** das Federelement (11a) mit dem Element (2a) klebetechnisch verbunden ist, wobei die Klebestelle ein Gelenk zwischen dem Element (2a) und dem Federelement (11a) bildet.

14. Belag nach Anspruch 12, **dadurch gekennzeichnet, dass** das Federelement (11a) über einen Fuß (25) in einer Aufnahme (24) des Elements (2a) gehalten ist.

15. Belag nach Anspruch 14, **dadurch gekennzeichnet, dass** zwischen dem Fuß (25) und dem Federelement (11a) ein Gelenk (26) angeordnet ist.

16. Belag nach Anspruch 15, **dadurch gekennzeichnet, dass** das Gelenk (26) aus einem Werkstoff höherer Elastizität als der des Federelements (11 b) besteht.

17. Belag nach einem der Ansprüche 1 bis 16, **dadurch gekennzeichnet, dass** an einer Seite eines Elements (2, 2a - 2d) mehrere unabhängig voneinander verschwenkbare Federelemente (11, 11a - 11 d) angeordnet sind.

18. Belag nach Anspruch 17, **dadurch gekennzeichnet, dass** benachbarte Federelemente (11, 11a - 11 d) durch ein elastisches Bauelement relativ zueinander beweglich miteinander verbunden sind.

19. Belag nach einem der Ansprüche 1 bis 18, **dadurch gekennzeichnet, dass** das die Verriegelungskante (17) aufweisende Element (1, 1a - 1d) eine unter das das Federelement (11, 11 a - 11 d) tragende Element (2, 2a - 2d) greifende Verriegelungsleiste (3) aufweist, welche geeignet ist, benachbarte Elemente (1, 1a - 1d, 2, 2a - 2d) gegen Zugbelastungen in einer Verlegeebene (V) zu sichern.

20. Belag nach einem der Ansprüche 1 bis 19, **dadurch gekennzeichnet, dass** wenigstens ein Element als ein Rahmenbauteil für eine Rahmenkonstruktion ausgeführt ist.

21. Verfahren zur Herstellung eines Elements für einen Belag mit den Merkmalen wenigstens eines der Patentansprüche 1 bis 20 mit folgenden Schritten:
a) Ausformen des Federelements (11b) an dem Element (1b, 2b) durch Einbringen eines Freiraums (12) auf einer Rückseite (27) des Federelements (11 b);
b) zumindest teilweises Füllen des Freiraums (12) mit einem elastischen Werkstoff, der sich von der Rückseite (27) des Federelements (11 b) zum Kern (15) des Elements (2b) erstreckt, um das Federelement (11 b) mit dem Kern (15) zu verbinden;
c) Trennen des Federelements (11 b) von dem Element (2b), so dass es nur von dem elastischen Werkstoff (28) an dem Kern (15) gehalten ist.

22. Verfahren zur Herstellung eines Elements für einen Belag mit den Merkmalen wenigstens eines der Patentansprüche 1 bis 20 mit folgenden Schritten:
a) Ausformen des Federelements (11c) durch Einbringen einer Quetschfuge (31) die im Abstand zur Oberseite (9) des Elements (2c) und oberhalb des Federelements (11 c) verläuft;
b) zumindest teilweises Füllen der Quetschfuge (31) mit einem elastischen Werkstoff (28), der sich von einer Oberseite (32) des Federelements (11c) zum Kern (15) des Elements (2c) erstreckt, um das Federelement (11c) mit dem Kern (15) des Elements (2c) zu verbinden;
c) Trennen des Federelements (11c) vom Element (2c) durch Einbringen eines Freiraums (12) auf einer Rückseite (27) des Federelements (11c), so dass es nur von dem elastischen Werkstoff (28) an dem Kern (15) gehalten ist.

23. Verfahren zur Herstellung eines Elements für einen Belag mit den Merkmalen wenigstens eines der Patentansprüche 1 bis 20 mit folgenden Schritten:
a) Ausformen des Federelements (11d) an dem Element (1d, 2d) durch Einbringen einer Quetschfuge (33), die im Abstand zur Oberseite (9) des Elements (2d) und oberhalb des Federelements (11d) verläuft und durch Einbringen eines Freiraums (12) auf der Rückseite (27) des Federelements (11d);
b) Zumindest teilweises Füllen der Quetschfuge (33) mit einem elastischen Werkstoff (28), der sich auf zwei gegenüberliegenden Wänden (34, 35) der Quetschfuge (33) erstreckt, um das Federelement (11d) zusätzlich mit dem Kern (15) des Elements (2d) zu verbinden;
c) Verbreitern des Freiraums (12) in Richtung der Rückseite (27) des Federelements (11d), so dass das Federelement (11d) entweder nur über den elastischen Werkstoff (28) oder aber flächenmäßig überwiegend über den elastischen Werkstoff (28) mit dem Kern (15) verbunden ist.

## Claims

1. Covering consisting of elements which can be mechanically interconnected, at least one of the elements being a panel (1, 1a-1d, 2, 2a-2d), comprising the following features:
a) the elements (1, 1a-1d, 2, 2a-2d) have a matching profile on the opposite sides (6) thereof, by means of which profile adjacent elements (1, 1a-1d, 2, 2a-2d) can be locked in the horizontal and vertical direction by means of a substantially vertical or pivoting joining movement,
b) the locking can be brought about by at least one tongue element (11, 11 a-11 d) which is articulated to one of the elements (1, 1 a-1d, 2, 2a-2d) and can be pivoted behind a locking edge (17) of the other element (1, 1a-1d) during the joining movement, which locking edge extends substantially in the horizontal direction,
**characterised in that**
c) when adjacent elements (1, 1a-1d, 2, 2a-2d) join, the tongue element (11, 11a-1d) slides down on a support surface (19) of the adjacent element (1, 1a-1d), which support surface is opposite the locking edge (17),
d1) the support surface (19) being inclined in relation to a laying plane (V) so as to point towards the locking edge (17) and bringing about a horizontal displacement of the tongue element (11, 11a-11d) behind the locking edge (17),
d2) or, alternatively, the support surface (19) extending parallel to the laying plane (V) and the tongue element (11d) being inclined at its free end (20) towards the laying plane (V) and thereby bringing about a horizontal displacement of the tongue element (11d) behind the locking edge (17) when adjacent elements (1d, 2d) join.

2. Covering according to claim 1, **characterised in that** the tongue elements (11, 11a-11d) are displaced exclusively in the direction of the adjacent element (1, 1a-1d).

3. Covering according to either claim 1 or claim 2, **characterised in that** the tongue element (11, 11 a-11 d) is clamped in the locked position between the locking edge (17) and the support surface (19).

4. Covering according to any of claims 1 to 3, **characterised in that** the element (2, 2a-2d) has a top side (9), the tongue element (11, 11c, 11 d) being connected to the element (2, 2c, 2d) only at its end (13) adjacent to the top side (9).

5. Covering according to any of claims 1 to 4, **characterised in that** the tongue element (11) is formed in one piece with the element (2).

6. Covering according to either claim 4 or claim 5, **characterised in that** the tongue element (11, 11c-11d) comprises at least one squeeze gap (14, 31, 33).

7. Covering according to claim 6, **characterised in that** resilient material is arranged in the at least one squeeze gap (31, 33), which material has a higher elasticity than the tongue element (11c, 11d).

8. Covering according to claim 7, **characterised in that** the at least one squeeze gap (33) has mutually opposite walls (34, 35) which are coated at least in part, in particularly completely, with the resilient material, the coatings (36, 37) being spaced apart in the unlocked state and being in contact in the locked state.

9. Covering according to claim 8, **characterised in that** the contacting coatings (36, 37) are provided to stick together when in mutual contact.

10. Covering according to any of claims 1 to 7, **characterised in that** a rear side (27) of the tongue element (11 b) faces a core (15) of the element (2b), a clearance (12) being located between the core (2b) and the rear side (27), in at least part of which clearance a resilient material is arranged, by means of which the tongue element (11 b) is connected to the core (15).

11. Covering according to any of claims 1 to 10, **characterised in that** the resilient material is an adhesive.

12. Covering according to any of claims 1 to 4, **characterised in that** the tongue element (11a) is a separate component which is attached to the element (2a).

13. Covering according to claim 12, **characterised in that** the tongue element (11 a) is adhesively connected to the element (2a), the adhesion point forming an articulation between the element (2a) and the tongue element (11a).

14. Covering according to claim 12, **characterised in that** the tongue element (11a) is held in a socket (24) of the element (2a) by a flange (25).

15. Covering according to claim 14, **characterised in that** an articulation (26) is arranged between the flange (25) and the tongue element (11a).

16. Covering according to claim 15, **characterised in that** the articulation (26) is made of a material having a higher elasticity than that of the tongue element (11 b).

17. Covering according to any of claims 1 to 16, **characterised in that** a plurality of mutually independent pivotable tongue elements (11, 11a-11d) are arranged on one side of an element (2, 2a-2d).

18. Covering according to claim 17, **characterised in that** adjacent tongue elements (11, 11 a-11 d) are interconnected so as to be movable in relation to each other by means of a resilient component.

19. Covering according to any of claims 1 to 18, **characterised in that** the element (1, 1a-1d) which comprises the locking edge (17) comprises a locking strip (3) which engages below the element (2, 2a-2d) supporting the tongue element (11, 11 a-11 d) and is suitable for protecting adjacent elements (1, 1a-1d, 2, 2a-2d) against tensile loads in a laying plane (V).

20. Covering according to any of claims 1 to 19, **characterised in that** at least one element is configured as a frame component for a frame structure.

21. Method for producing an element for a covering comprising the features of at least one of claims 1 to 20, comprising the following steps:
a) moulding the tongue element (11 b) on the element (1 b, 2b) by introducing a clearance (12) on a rear side (27) of the tongue element (11 b);
b) filling the clearance (12) at least in part with a resilient material which extends from the rear side (27) of the tongue element (11b) to the core (15) of the element (2b) so as to connect the tongue element (11 b) to the core (15);
c) separating the tongue element (11 b) from the element (2b) such that it is only held on the core (15) by the resilient material (28).

22. Method for producing an element for a covering comprising the features of at least one of claims 1 to 20, comprising the following steps:
a) moulding the tongue element (11c) by introducing a squeeze gap (31) which extends at a spacing from the top side (9) of the element (2c) and above the tongue element (11c);
b) filling the squeeze gap (31) at least in part with a resilient material (28) which extends from the top side (32) of the tongue element (11c) to the core (15) of the element (2c) so as to connect the tongue element (11c) to the core (15) of the element (2c);
c) separating the tongue element (11c) from the element (2c) by introducing a clearance (12) on a rear side (27) of the tongue element (11c) such that it is only held on the core (15) by the resilient material (28).

23. Method for producing an element for a covering comprising the features of at least one of claims 1 to 20, comprising the following steps:
a) moulding the tongue element (11d) on the element (1d, 2d) by introducing a squeeze gap (33) which extends at a spacing to the top side (9) of the element (2d) and above the tongue element (11d) and by introducing a clearance (12) on the rear side (27) of the tongue element (11 d);
b) filling the squeeze gap (33) at least in part with a resilient material (28) which extends on two opposite walls (34, 35) of the squeeze gap (33) so as to additionally connect the tongue element (11d) to the core (15) of the element (2d);
c) widening the clearance (12) in the direction of the rear side (27) of the tongue element (11d) such that the tongue element (11d) is connected to the core (15) either by the resilient material (28) alone or predominantly by the resilient material (28) in terms of the surface thereof.

## Revendications

1. Garniture constituée d'éléments pouvant être reliés mécaniquement les uns aux autres, dans laquelle au moins l'un des éléments est un panneau (1, 1a-1d, 2, 2a-2d) avec les caractéristiques suivantes :
a) les éléments (1, 1a-1d, 2, 2a-2d) possèdent, sur leurs côtés en regard (6), un profil mutuel correspondant, avec lequel des éléments adjacents (1, 1a-1d, 2, 2a-2d) peuvent être verrouillés les uns aux autres dans la direction horizontale et dans la direction verticale par déplacement sensiblement vertical ou pivotant de l'assemblage,
b) le verrouillage peut être assuré par au moins un élément à ressort (11, 11a-11d), qui est articulé sur l'un des éléments (1, 1a-1d, 2, 2a-2d) et peut pivoter, lors du déplacement de l'assemblage, derrière une arête de verrouillage (17) de l'autre élément (1, 1a-1d) s'étendant sensiblement dans la direction horizontale,
**caractérisée en ce que** :
c) l'élément à ressort (11, 11a-11d) est dévié, lors de l'assemblage d'éléments adjacents (1, 1a-1d, 2, 2a-2d) sur une surface d'appui (19) de l'élément adjacent (1, 1a-1d) en regard de l'arête de verrouillage (17),
d1) dans laquelle la surface d'appui (19) est inclinée pour se tourner vers l'arête de verrouillage (17) par rapport à un plan de pose (V) et provoque un déplacement horizontal de l'élément à ressort (11, 11a-11d) derrière l'arête de verrouillage (17), ou
d2) dans laquelle, dans l'alternative, la surface d'appui (19) s'étend parallèlement au plan de pose (V) et l'élément à ressort (11d) est incliné à son extrémité libre (20) par rapport au plan de pose (V) et, de la sorte, lors de l'assemblage d'éléments adjacents (1d, 2d), provoque un déplacement horizontal de l'élément à ressort (11d) derrière l'arête de verrouillage (17).

2. Garniture selon la revendication 1, **caractérisée en ce que** le déplacement de l'élément à ressort (11, 11a-11d) se fait exclusivement dans la direction de l'élément adjacent (1, 1a-1d).

3. Garniture selon la revendication 1 ou la revendication 2, **caractérisée en ce que** l'élément à ressort (11, 11a-11d) est bloqué dans la position de verrouillage entre l'arête de verrouillage (17) et la surface d'appui (19).

4. Garniture selon l'une quelconque des revendications 1 à 3, **caractérisée en ce que** l'élément (2, 2a-2d) présente une face supérieure (9), dans laquelle l'élément à ressort (11, 11c, 11d) est lié à l'élément (2, 2c, 2d) uniquement à son extrémité (13) adjacente à la face supérieure (9).

5. Garniture selon l'une quelconque des revendications 1 à 4, **caractérisée en ce que** l'élément à ressort (11) est un composant d'une pièce de l'élément (2).

6. Garniture selon la revendication 4 ou la revendication 5, **caractérisée en ce que** l'élément à ressort (11, 11c-1d) présente au moins un joint de compression (14, 31, 33).

7. Garniture selon la revendication 6, **caractérisée en ce qu'**il est aménagé dans le au moins un joint de compression (31, 33) un matériau élastique, qui possède une plus grande élasticité que l'élément à ressort (11c, 11d).

8. Garniture selon la revendication 7, **caractérisée en ce que** le au moins un joint de compression (33) possède des parois (34, 35) en regard l'une de l'autre, qui sont revêtues au moins en partie, en particulier complètement, du matériau élastique, dans lequel les revêtements (36, 37) sont agencés à l'état non verrouillé à distance l'un de l'autre et sont en contact mutuel à l'état verrouillé.

9. Garniture selon la revendication 8, **caractérisée en ce que** les revêtements (36, 37) qui sont en contact mutuel sont prévus à cet effet pour adhérer l'un à l'autre lors d'un contact mutuel.

10. Garniture selon l'une quelconque des revendications 1 à 7, **caractérisé en ce qu'**une face arrière (27) de l'élément à ressort (11b) est tournée vers un noyau (15) de l'élément (2b), dans laquelle il y a entre le noyau (2b) et la face arrière (27) un espace libre (12), dans lequel est agencé au moins en partie un matériau élastique, par lequel l'élément à ressort (11b) est lié au noyau (15).

11. Garniture selon l'une quelconque des revendications 1 à 10, **caractérisée en ce que** le matériau élastique est une colle.

12. Garniture selon l'une quelconque des revendications 1 à 4, **caractérisée en ce que** l'élément à ressort (11a) est un composant séparé, qui est fixé à l'élément (2a).

13. Garniture selon la revendication 12, **caractérisée en ce que** l'élément à ressort (11a) est lié à l'élément (2a) par une technique de collage, dans lequel le point de colle forme une articulation entre l'élément (2a) et l'élément à ressort (11a).

14. Garniture selon la revendication 12, **caractérisée en ce que** l'élément à ressort (11a) est maintenu via un pied (25) dans un logement (24) de l'élément (2a).

15. Garniture selon la revendication 14, **caractérisée en ce qu'**une articulation (26) est ménagée entre le pied (25) et l'élément à ressort (11a).

16. Garniture selon la revendication 15, **caractérisée en ce que** l'articulation (26) est constituée d'un matériau de plus grande élasticité que celle de l'élément à ressort (11b).

17. Garniture selon l'une quelconque des revendications 1 à 16, **caractérisée en ce que** sont agencés, sur un côté d'un élément (2, 2a-2d), plusieurs éléments à ressort (11, 11a-11d) susceptibles de pivoter indépendamment l'un de l'autre.

18. Garniture selon la revendication 17, **caractérisée en ce que** des éléments à ressort adjacents (11, 11a-11d) sont liés l'un à l'autre par un élément de construction élastique de manière à pouvoir se déplacer l'un par rapport à l'autre.

19. Garniture selon l'une quelconque des revendications 1 à 18, **caractérisée en ce que** l'élément (1, 1a-1d) présentant l'arête de verrouillage (17) présente un tasseau de verrouillage (3) s'accrochant en dessous de l'élément (2, 2a-2d) portant l'élément à ressort (11, 11a-11d), lequel tasseau convient pour assurer les éléments adjacents (1, 1a-1d, 2, 2a-2d) à l'encontre de sollicitations à la traction dans un plan de pose (V).

20. Garniture selon l'une quelconque des revendications 1 à 19, **caractérisée en ce qu'**au moins un élément est réalisé sous la forme d'un composant de cadre pour une structure de cadre.

21. Procédé de fabrication d'un élément pour une garniture ayant les caractéristiques au moins de l'une des revendications 1 à 20 avec les étapes suivantes consistant à :
a) structurer l'élément à ressort (11b) sur l'élément (1b, 2b) en ménageant un espace libre (12) sur une face arrière (27) de l'élément à ressort (11b) ;
b) remplir au moins en partie l'espace libre (12) avec un matériau élastique, qui s'étend de la face arrière (27) de l'élément à ressort (11b) au noyau (15) de l'élément (2b) pour lier l'élément à ressort (11b) au noyau (15) ;
c) séparer l'élément à ressort (11b) de l'élément (2b) de sorte qu'il ne soit maintenu sur le noyau (15) que par le matériau élastique (28).

22. Procédé de fabrication d'un élément pour une garniture ayant les caractéristiques au moins de l'une des revendications 1 à 20 avec les étapes suivantes consistant à :
a) structurer l'élément à ressort (11c) par mise en place d'un joint de compression (31) qui s'étend à distance de la face supérieure (9) de l'élément (2c) et au-dessus de l'élément à ressort (11c) ;
b) remplir au moins en partie le joint de compression (31) par un matériau élastique (28), qui s'étend d'une face supérieure (32) de l'élément à ressort (11c) au noyau (15) de l'élément (2c) pour lier l'élément à ressort (11c) au noyau (15) de l'élément (2c) ;
c) séparer l'élément à ressort (11c) de l'élément (2c) en ménageant un espace libre (12) sur une face arrière (27) de l'élément à ressort (11c) de sorte qu'il ne soit maintenu sur le noyau (15) que par le matériau élastique (28).

23. Procédé de fabrication d'un élément pour une garniture ayant les caractéristique d'au moins l'une des revendications 1 à 20 avec les étapes suivantes consistant à :
a) structurer l'élément à ressort (11d) sur l'élément (1d, 2d) par mise en oeuvre d'un joint de compression (33), qui s'étend à distance de la face supérieure (9) de l'élément (2d) et au-dessus de l'élément à ressort (11d) et en ménageant un espace libre (12) sur la face arrière (27) de l'élément à ressort (11d) ;
b) remplir au moins en partie le joint de compression (33) par un matériau élastique (28), qui s'étend sur deux parois en regard (34, 35) du joint de compression (33) pour relier l'élément à ressort (11d) également au noyau (15) de l'élément (2d) ;
c) élargir l'espace libre (12) dans la direction de la face arrière (27) de l'élément à ressort (11d) de sorte que l'élément à ressort (11d) soit relié au noyau (15) uniquement par le matériau élastique (28) ou en surface de manière prépondérante via le matériau élastique (28).
